(19) Europäisches Patentamt
European Patent Office
Office européen des brevets

(11) **EP 4 711 985 A1**

(12) **EUROPEAN PATENT APPLICATION**

(43) Date of publication:
**18.03.2026 Bulletin 2026/12**

(21) Application number: **24275103.0**

(22) Date of filing: **11.09.2024**

(51) International Patent Classification (IPC):
***G06N 3/088*** (2023.01)    ***G06N 3/096*** (2023.01)

(52) Cooperative Patent Classification (CPC):
**G06N 3/088; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Victory Point**
**Frimley**
**Camberley, Surrey GU16 7EX (GB)**

(54) **TRAINING A MACHINE LEARNING MODEL**

(57)    There is described a computer implemented method of training a machine learning model. The method comprises obtaining source data and target data, selecting a subset of the source data based on minimising dissimilarity between the source data and the target data, and training the machine learning model using the selected subset of the source data.

Fig. 2

**Description**

FIELD

The present invention relates to a computer implemented method of training a machine learning model. The presently described techniques are particularly aimed at a technique for data pruning training data and training a machine learning model using such pruned data.

BACKGROUND

The development of robust models - that is, the ability of a model to withstand uncertainties and perform accurately in different contexts, such as when given previously unseen data - has been a longstanding goal in machine learning, and is crucial to the widespread deployment of those models.

An important factor which determines a model's robustness is the composition of the training set. Conversely, and perhaps unexpectedly, variables such as the model architecture, learning process, loss function, hyperparameters or training set size can often have little to no effect on model robustness.

A popular approach to improving robustness is data pruning (also referred to as data filtering or subset selection), which aims to improve model robustness by providing an appropriately tailored training dataset. A variety of selection criteria for data pruning currently exits, such as outlier removal or the reduction of memory or annotation requirements, however the reliability of these criteria to produce robust models remains poor.

As such it is desirable to explore alternative techniques for generating robust models beyond existing data pruning techniques.

SUMMARY

According to an aspect of the present invention, there is provided a computer implemented method of training a machine learning model. The method comprises obtaining source data and target data, selecting a subset of the source data based on minimising dissimilarity between the source data and the target data, and training the machine learning model using the selected subset of the source data. Preferably the source data may be labelled data while the target data may be unlabelled data.

In an example, dissimilarity between the source data and the target data may be based on maximum mean discrepancy.

In an example, minimising dissimilarity between the source data and target data may comprise determining a selection vector with values of 0 or 1, and the selection of the subset may suitably comprise pruning the source data using the selection vector.

In an example, minimising the dissimilarity comprises minimising the vector $u$ in the quadratic

$$\frac{1}{N_{ss}} u^T K u - \frac{2}{N_t} c^T u$$, where $K$ and c are similarity matrices. In a related example, at least one of the similarly matrices may be generated using a radial bias function.

In an example, selecting the subset comprises selecting a predetermined number of examples from the source data.

In an example, obtaining the source and target data comprises extracting feature embeddings. Relatedly, extracting the feature embeddings may comprise inputting the data through a pre-trained featuriser.

In an example, the machine learning model may be configured to assign classifications to input data, such as to classify a sound source corresponding to acoustic data input to the machine learning model. Example classes of sounds include sounds produced by different types of marine vessel, such as at least one of pleasure vessel, cargo vessel, fishing vessel, and military vessel.

In a related aspect of the present invention, there is provided a computer implemented method of inference of a neural network trained as outlined above.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

BRIEF DESCRIPTION OF THE FIGURES

Embodiments of the invention will now be described by way of example only with reference to the figures, in which:

Figure 1 shows an example electronic device;

Figure 2 shows an example method of training a machine learning model;

Figure 3 shows spectrograms of sounds produced by different marine objects (5 kHz bandwidth, time axis scales variable);

Figure 4 shows t-SNE plots of source and target feature embeddings for 4 exemplar training scenarios; and

Figure 5 shows a scatter plot of the MMD between the training and test domains vs model accuracy on the test domain.

DETAILED DESCRIPTION

By way of introduction, it has been determined that access to the test distribution (that is, the dataset which provides an unbiassed evaluation of a final model fit on a training dataset, also referred to as a holdout data set) may be utilised to allow a pruning algorithm to make a more informed choice about which data to include in a pruned dataset. In the following, the problem of improved data pruning (from which a more robust model may be yielded) is considered from the perspective of unsupervised domain adaptation (UDA).

UDA is a well-established paradigm which attempts to in-crease robustness to domain shifts by aligning the training and test distributions - that is, by minimising some measure of the statistical distance between them. In the context of pruning, distribution alignment must be balanced with the need to not reduce the training set so far that the model overfits and loses its generalisation capability. Additionally, as pruning is a discrete decision problem, it is desirable that the choice of distance measure is optimisable.

The following described techniques have been determined to achieve higher out of distribution performance than comparable techniques.

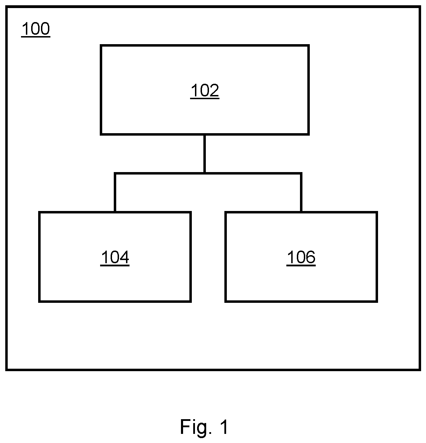

Figure 1 is a block diagram of a computing device 100 configurable to execute embodiments of the invention. The device will normally comprise, or be associated with, at least one processor 102, memory 104 and a communications interface 106.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. It will be understood that this is a non-exhaustive and non-limiting list of example devices

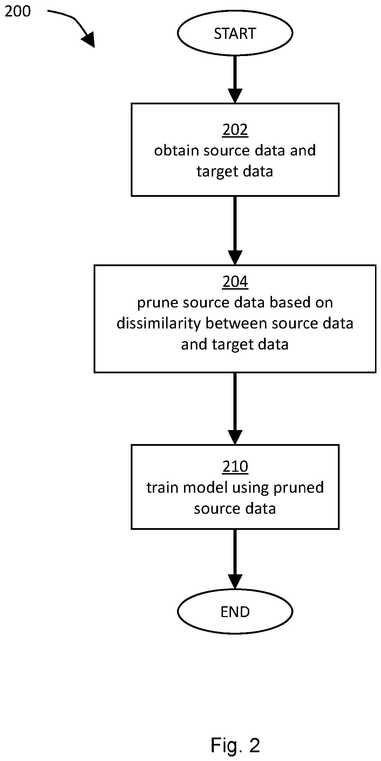

Figure 2 shows an example method, for training a machine learning model, that can be performed by means of software instructions being executed by the computing device 100, according to an embodiment. However, in some embodiments, one or more of the steps may be performed by a remote computing device, such as a server or a cloud service, that is in communication with the device 100. It will also be appreciated that some of the steps described herein may be re-ordered or omitted, additional steps may be performed, and although the steps are shown as being performed in sequence, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

The machine learning may be configured to perform at least one of a classifier and/or a regression operation. In an example, the machine learning may be optimised for domain generalisation.

In the following, it is assumed that a training data set to be used to train the neural network for its intended purpose is readily available for such use. Suitably, embodiments herein may be considered, if needed, to be prepended with a step of obtaining such training data. In an example, obtaining training data may comprise downloading the training data from a publicly available repository. In another example, obtaining the training data may comprise generating a bespoke data set using suitable techniques as will be familiar to those in the art.

For example, the purpose of the machine learning model may be at least one of sound analysis or image analysis, and the training data might respectively comprise audio recordings or camera images, as appropriate. Sound analysis tasks might include classification based on sound data (for example, a digital sound signal). For example, classification of marine sounds, such as classification of a type of marine vessel based on the noise it produces, or detection of certain types of marine animals such as humpback whales. Image analysis might include, for example, tumour detection, object classification, or wild animal classification.

Suitably, the training (or source) data set comprises the type of data that the machine learning model is configured to receive as input (which will depend on its purpose). For example, where the neural network is configured for digital sound analysis, the training data may comprise sound files (e.g., audio recordings) of various classes of object to be classified. Where the neural network is configured for image classification, the training data may comprise images showing various classes of object to be classified.

For example, for marine vessel classification, the training data may comprise sounds produced by different classifications of boats: the classes may be at least one of pleasure vessel, cargo vessel, fishing vessel, or military vessel. For marine animal detection, the classification may be binary in the sense that the data indicates the presence of the particular animal or not; for example, whether a recorded sound was produced by a humpback whale.

The training data may have been collected from different domains. In the present context, domains correspond to different recording (sound) or capture (image) information; that is, the circumstances under which the data was collected. For example, for marine sound analysis, domains may include at least one of a location of the recording (e.g., which body of water the data was collected from, such as English Channel, North Sea, latitude and longitude, and so on), a time of day of the recording, weather during the recording, and position of recording equipment on a vessel.

At step 202, the method comprises obtaining source data and target data. Using common machine learning parlance, the source data may correspond to a training dataset, while the target data may correspond to a test (or holdout) dataset. Formally, the source data may correspond to a set of samples $\mathcal{D}_s = \{(x_i^s, y_i^s)\}_{i=1}^{N_s}$ from a source distribution $P_s(x, y)$, and the target data correspond to a set of samples $\mathcal{D}_t = \{x_j^t\}_{j=1}^{N_t}$ from a different target distribution $P_t(x, y)$. Here, correspond may be taken to mean includes the raw training and test data, or comprises some manipulation of the raw training and test data.

In a preferred embodiment, the training dataset may comprise labelled data, while the test dataset may comprise unlabelled data; however, the disclosure is not limited thereto, and in other embodiments the training and test data may both be labelled, both be unlabelled, or the training data may be unlabelled and the test data labelled.

In many cases, however, the input data to the machine learning model (i.e., the training and test data) will have high dimensionality, such that operating directly on the input data becomes impractical. In these instances, it may be desirable to operate on feature embeddings extracted from the training dataset and test dataset. That is, at step 202, obtaining source data and target data may comprise extracting feature embeddings from the training dataset and test dataset, respectively.

In one embodiment, extracting feature embeddings may be achieved using a pre-trained featuriser; preferably, a featuriser pre-trained on the training samples $\mathcal{D}_s$. More formally, the method may comprise extracting feature embeddings $z_i^s = \Theta_F(x_i^s)$ and $z_j^t = \Theta_F(x_j^t)$, respectively, where $\Theta_F : X \to Z$ is a featuriser pre-trained on the entirety of $\mathcal{D}_s$. In the following it is assumed that the method is applied to extracted feature embeddings $z_i^s$ and $z_j^t$ as the source data and target data, but the method may be readily adapted to utilise training data $x_i^s$ and test data $x_j^t$.

At step 204, the method comprises pruning the training data so that a carefully curated selection of the training data is used for training the machine learning model. Put another way, the method comprises selecting a subset of the training data. Here, subset selection is based on minimising a dissimilarity between the source data and the target data.

Suitably, the goal is to produce a model $\Theta : X \to Y$ to minimise the risk under $P_t$

$$R_t(\Theta) \triangleq \mathbb{E}_{(x,y) \sim P_t}[L(\Theta(x), y)]. \qquad (1)$$

That is, to fit 0 to a pruned subset $\mathcal{D}_{ss} \subseteq \mathcal{D}_s$, i.e., to minimise a proxy to $R_t$, given by

$$R_{ss}(\Theta) = \frac{1}{N_{ss}} \sum_{i=1}^{N_s} u_i L(\Theta(x_i^s), y_i^s), \qquad (2)$$

where $u_i \in \{0,1\}$ is a binary variable indicating whether training pair ($x_i^s, y_i^s$) is included in $\mathcal{D}_{ss}$, and $N_{ss} = |\mathcal{D}_{ss}|$ (the total number of samples to include in the selection) is a hyperparameter to be determined. Determination of $N_{ss}$ may be predetermined - i.e., the pruned selection may be a preset size - or its size may be determined as part of the minimisation algorithm.

Thus the technique may be summarised as selecting appropriate values for $u_i$.

Suitably, let $u = [u_1, ..., u_{N_s}]^T$ be a vector which, when applied to the source data, selects that data from the source data set. The objective then is to select $u$ to minimise the discrepancy between $\mathcal{D}_{ss}$ and $\mathcal{D}_t$.

In principle, any suitable quantitative distance measure may be used to determine similarity between source and target data (provided that measure allows for minimisation algorithms to be applied). The following however focusses on maximum mean discrepancy (MMD) as the (dis)similarity criterion.

The (squared) empirical MMD between the feature embeddings of $\mathcal{D}_{ss}$ and $\mathcal{D}_t$ is given by

$$\mathrm{MMD}^2 = \left\| \frac{1}{N_{ss}} \sum_{i=1}^{N_s} u_i \phi(z_i^s) - \frac{1}{N_t} \sum_{j=1}^{N_t} \phi(z_j^t) \right\|_{\mathcal{H}}^2, \qquad (3)$$

where $\mathcal{H}$ is a (potentially infinite-dimensional) reproducing kernel Hilbert space, and $\phi : \mathcal{Z} \to \mathcal{H}$ is an implicit mapping. $\mathcal{H}$ is associated with a unique positive-definite kernel $\kappa : \mathcal{Z} \times \mathcal{Z} \to \mathbb{R}$ for which the reproducing property $\kappa(z_i, z_j) = \langle \phi(z_i), \phi(z_j) \rangle_{\mathcal{H}}$ is satisfied. Suitably, this property allows for the kernel trick to be adopted, whereby inner products (and thus norms) in $\mathcal{H}$ are substituted by evaluations of $\kappa$. In this case, (3) becomes

$$\mathrm{MMD}^2 = \frac{1}{N_{ss}^2} \sum_{i=1}^{N_s} \sum_{j=1}^{N_s} u_i u_j \kappa(z_i^s, z_j^s) + \frac{1}{N_t^2} \sum_{i=1}^{N_t} \sum_{j=1}^{N_t} \kappa(z_i^t, z_j^t)$$

$$- \frac{2}{N_{ss} N_t} \sum_{i=1}^{N_s} u_i \sum_{j=1}^{N_t} \kappa(z_i^s, z_j^t). \qquad (4)$$

Here, $K \in \mathbb{R}^{N_s \times N_s}$, $K_{ij} = \kappa(z_i^s, z_j^s)$ and $c \in \mathbb{R}^{N_s}$, $c_i = \sum_{j=1}^{N_t} \kappa(z_i^s, z_j^t)$, where $K$ and c are kernel matrices. The minimisation problem can now be formulated as the binary quadratic program

$$\min_u \frac{1}{N_{ss}} u^T K u - \frac{2}{N_t} c^T u \qquad (5)$$

subject to the selection vector $u_i \in \{0,1\}$ and $\sum_{i=1}^{N_s} u_i = N_{ss}$.

For $\kappa$, it is preferable to adopt a radial basis function (RBF) mixture kernel, given by

$$\kappa(z_i, z_j) = \sum_{\gamma \in \mathcal{G}} e^{-\gamma \|z_i - z_j\|^2} \qquad (7)$$

with $\mathcal{G}$ = {0.001, 0.01, 0.1, 1, 10}. The RBF allows the technique to capture nonlinear relationships between domains, whilst mixing RBFs with different bandwidths provides an efficient solution to multi-scale analysis.

Suitably, with the vector $u$ determined it may be applied to the training data to yield a suitable subset of the training data (the 'selected' or 'pruned' data) which will yield an improved model.

Thus, at step 206, the method comprises training the machine learning model using the selected subset of the training data.

The above technique was evaluated on for its use in detection of humpback whale calls across data from different acoustic monitoring programs; that is, a real-world domain shift problem. Given the nature of bioacoustics monitoring, where a labelled dataset comprising several locations may already be available, and then audio from a new location must be analysed, the above technique is particularly suitable for such tasks. There are multiple varying factors which can affect bioacoustics monitoring, including the recording equipment, environmental conditions, the distribution of nontarget sound events, or the call repertoire of the animals themselves, and so the above technique allows for determining training data which is most relevant to build a bespoke model for new data, while discarding bad samples.

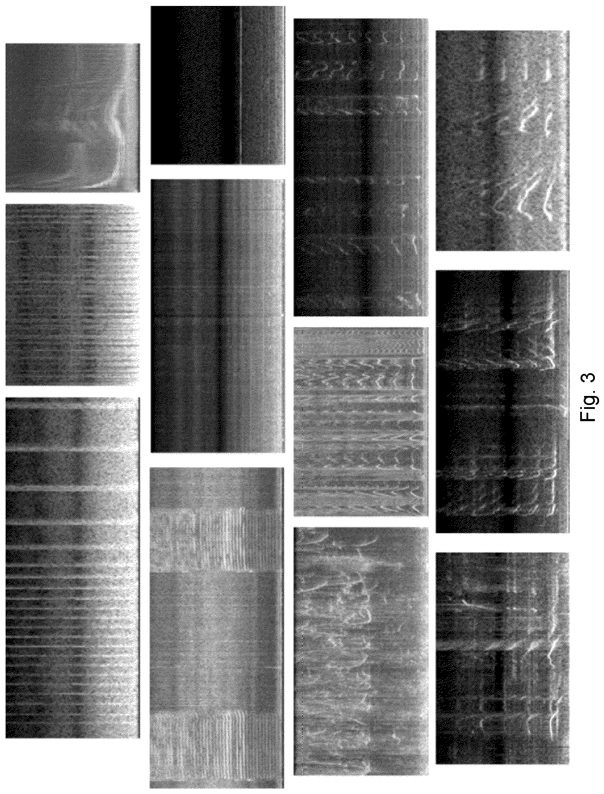

Figure 3 shows exemplary spectrograms for sounds captured for marine animal classification purposes. Top row: sperm whale clicks, pilot whale clicks, seal vocalisations. Second row: minke whale boings, right whale calls in strong vessel noise, electrical interference. Third row: dolphin whistles, dolphin creaks, right whale calls. Bottom row: three humpback whale calls.

The dataset comprises 8,000 samples of underwater sound events split equally across 4 recording locations (Madagascar, UK, Hawaii, and Australia). Each sample is a PCEN-normalised mel-spectrogram of a 4-second audio clip sampled at 10 kHz, labelled as either "humpback whale" or "not humpback whale".

The model comprises a simple 4-layer CNN architecture, with 16 filters per layer and RELU activations. This is trained on 3 locations (i.e., domains) at a time, using the Adam optimiser, for 2,000 iterations. The remaining location is split into a UDA set (referred to as $\mathcal{D}_t$ above), used for adaptation, and an independent evaluation set, used for evaluation. Since no relevant pre-trained feature extractor is available for this data, an initial training step (i.e., step 202) is performed on $\mathcal{D}_s$ to produce $\Theta_F$, using the same architecture described above. This is followed by the pruning method (step 204), the main training loop on $\mathcal{D}_{ss}$ (step 206) and finally, evaluation on the evaluation data.

Experiments are conducted using the DomainBed framework, with the Gurobi Optimizer used to solve the IQP. $N_{ss}$ is set as a proportion of $N_s$, which is chosen via random search of size 10, from a uniform distribution between 20% and 99%. The entire set of experiments is repeated 3 times for reproducibility. All other hyperparameter choices and training details follow the DomainBed default options.

In total, 8 combinations of training strategies are compared, as shown in Table 1. This includes 2 baseline training algorithms used to optimise $\Theta$: ERM, and the adaptive CORAL algorithm, which also exploits $\mathcal{D}_t$. We then enhance these with either the current method (labelled AdaPrune in Table 1), KMM, or landmark selection.

Table 1

| Method | Test accuracy by held-out domain (%) | | | | |
|---|---|---|---|---|---|
| | 1 | 2 | 3 | 4 | Average |
| ERM | 67.9 ± 2.5 | 76.2 ± 5.8 | 67.8 ± 4.0 | 94.3 ± 0.4 | 76.5 ± 2.6 |
| + Landmarks | **77.0 ± 1.9** | 77.4 ± 5.6 | 66.7 ± 1.1 | 49.1 ± 0.8 | 67.5 ± 1.4 |
| + KMM | 68.4 ± 7.6 | 73.0 ± 1.5 | **82.4 ± 5.7** | **94.9 ± 0.3** | 79.7 ± 3.7 |
| + AdaPrune | 71.9 ± 3.0 | **77.5 ± 3.0** | 80.5 ± 6.1 | 93.8 ± 0.3 | **80.9 ± 2.9** |
| CORAL | 81.8 ± 1.9 | 91.6 ± 4.0 | 78.1 ± 3.6 | 94.8 ± 1.5 | 86.6 ± 1.9 |
| + Landmarks | 80.0 ± 3.1 | 80.8 ± 6.5 | 80.4 ± 7.4 | 85.0 ± 4.3 | 81.5 ± 4.0 |
| + KMM | 60.7 ± 2.8 | 90.8 ± 4.2 | 78.8 ± 7.0 | **95.2 ± 0.8** | 81.4 ± 1.4 |
| + AdaPrune | **77.5 ± 5.4** | **97.8 ± 1.0** | **93.0 ± 2.3** | 93.1 ± 1.7 | **90.4 ± 2.2** |

When training with ERM, the current technique (AdaPrune) provides an average accuracy gain of around 4%, outperforming the 3% gain of KMM. On its own, this is less than the 10% improvement of training the model with CORAL. However, interestingly, we can see that the adaptive effects of AdaPrune and CORAL are complementary to each other, meaning that combining the two gives the highest performance out of all the methods we test, a 14% improvement over non-adaptive training. On the other hand, KMM combined with CORAL, along with landmark selection, had a substantially negative impact on accuracy.

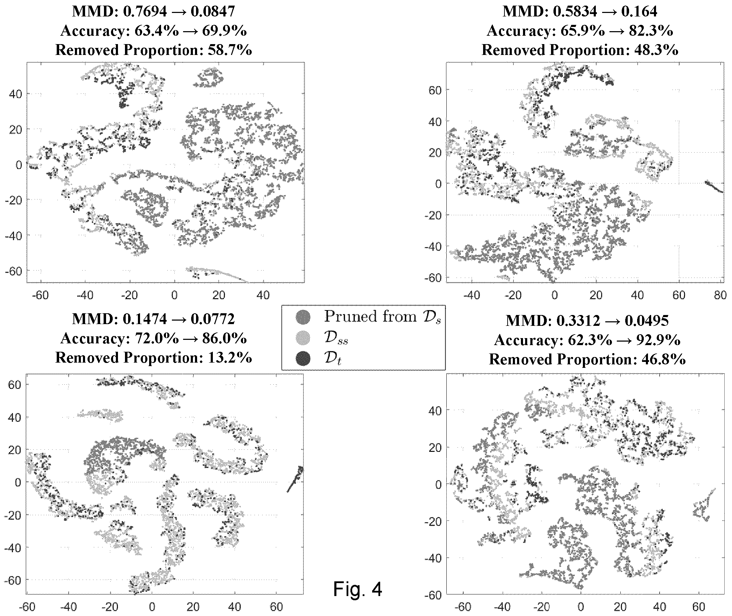

To better understand how examples are being pruned from the training dataset, it is possible to generate t-SNE plots of the feature embeddings $z_i^s$ and zj, as shown in Figure 4. For the specific training scenarios shown, we also report MMD($\mathcal{D}_s$, $\mathcal{D}_t$), MMD($\mathcal{D}_{ss}$, $\mathcal{D}_t$), accuracy of the model trained on $\mathcal{D}_s$, accuracy when trained on $\mathcal{D}_{ss}$, and the proportion of training examples which have been removed.

Here, red points indicate training examples which have been pruned from $\mathcal{D}_s$, green points are the training examples which have been retained, and blue points are the target examples $\mathcal{D}_t$. Also reported are the MMD and model accuracy before and after pruning, and the proportion of training examples removed. The plots show that the pruned training instances are the ones furthest from the target examples, which is a good indicator that these instances will have the least relevance to the test data. Removing these corresponds to a decrease in MMD and an increase in test-domain accuracy.

Further more, it is possible to analyse the relation between the MMD between the training and test domains, and model accuracy on the test domain. A negative correlation between these two variables substantiates reducing the MMD as a valid objective for data pruning.

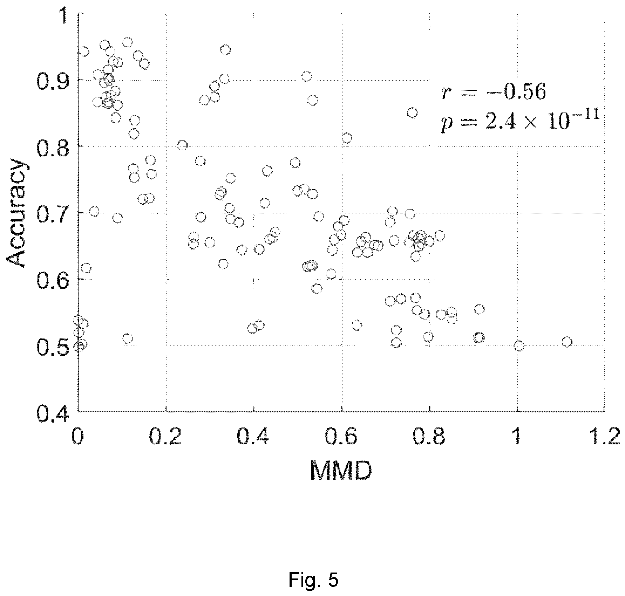

Figure 5 shows a scatter plot of MMD vs accuracy for the baseline ERM models for all repeats and hyperparameter sweeps (120 datapoints in total), along with the Pearson correlation and its associated p-value. The plot clearly shows the expected negative trend: that is, models trained on datasets more similar to the test data tend to perform better on that test data, with the value of $r$ = -0.56 indicating a moderate correlation between the two variables. This evidence confirms the use of the MMD as an effective criterion for pruning training data.

In summary, the above has described a new technique for unsupervised domain adaptation based on removing instances from the training dataset (i.e., data pruning). In this way, only the examples most relevant to the test domain are used to train the model. It is shown that the present techniques outperform its most closely related alternatives, and is complementary to other UDA approaches such as CORAL. Additionally, the optimisation procedure makes reasonable choices in determining the most irrelevant training examples to be removed, and its objective function is well-correlated with test domain accuracy.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer implemented method of training a machine learning model, comprising:

    obtaining source data and target data for training the machine learning model;
    selecting a subset of the source data based on minimising dissimilarity between the source data and the target data; and
    training the machine learning model using the selected subset of the source data.

2. The method of claim 1, wherein the dissimilarity between the source data and the target data is based on maximum mean discrepancy.

3. The method of claim 1, or 2, wherein minimising dissimilarity between the source data and target data comprises determining a selection vector $u$ with values of 0 or 1, and selecting the subset comprises pruning the source data using the selection vector.

4. The method of claim 3, wherein minimising the dissimilarity comprises minimising the vector $u$ in the quadratic $\frac{1}{N_{ss}} u^T K u - \frac{2}{N_t} c^T u$, where $K$ and c are similarity matrices.

5. The method of claim 4, wherein at least one of the similarly matrices is generated using a radial bias function

6. The method of any preceding claim, wherein the selecting comprises selecting a predetermined number of examples from the source data.

7. The method of any preceding claim, wherein obtaining the source data and target data comprises extracting feature embeddings.

8. The method of claim 7, wherein extracting the feature embeddings comprises inputting the source data and target data through a pre-trained featuriser.

9. The method of any preceding claim, wherein the source data comprises labelled data.

10. The method of any preceding claim, wherein the target data comprises unlabelled data.

11. The method of any preceding claim, wherein the machine learning model is configured to assign classifications to input data.

12. The method of claim 11, wherein the machine learning model is configured to classify a sound source corresponding to acoustic data input to the machine learning model.

13. The method of claim 12, wherein the classes of sounds comprise sounds produced by different types of marine vessel.

14. The method of claim 13, wherein the types of marine vessel include at least one of pleasure vessel, cargo vessel, fishing vessel, and military vessel.

Fig. 1

200

START

202
obtain source data and
target data

204
prune source data based on
dissimilarity between source data
and target data

210
train model using pruned
source data

END

Fig. 2

Fig. 3

MMD: $0.5834 \rightarrow 0.164$
Accuracy: $65.9\% \rightarrow 82.3\%$
Removed Proportion: $48.3\%$

MMD: $0.3312 \rightarrow 0.0495$
Accuracy: $62.3\% \rightarrow 92.9\%$
Removed Proportion: $46.8\%$

MMD: $0.7694 \rightarrow 0.0847$
Accuracy: $63.4\% \rightarrow 69.9\%$
Removed Proportion: $58.7\%$

MMD: $0.1474 \rightarrow 0.0772$
Accuracy: $72.0\% \rightarrow 86.0\%$
Removed Proportion: $13.2\%$

Pruned from $\mathcal{D}_s$
$\mathcal{D}_{ss}$
$\mathcal{D}_t$

Fig. 4

Fig. 5

Europäisches
Patentamt

European
Patent Office

Office européen
des brevets

# EUROPEAN SEARCH REPORT

**Application Number**

EP 24 27 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU YONGJIE ET AL: "Ship Classification in SAR Images With Geometric Transfer Metric Learning", IEEE TRANSACTIONS ON GEOSCIENCE AND REMOTE SENSING, IEEE, USA, vol. 59, no. 8, 7 October 2020 (2020-10-07), pages 6799-6813, XP011867628, ISSN: 0196-2892, DOI: 10.1109/TGRS.2020.3026387 [retrieved on 2021-07-20] * the whole document * | 1-14 | INV. G06N3/088 G06N3/096 |
| X | XU HUOYAO ET AL: "Discriminative subspace embedded dynamic geometrical and statistical alignment based on pseudo-label correction for cross-domain bearing fault diagnosis", MEASUREMENT SCIENCE AND TECHNOLOGY, IOP, BRISTOL, GB, vol. 35, no. 1, 27 September 2023 (2023-09-27), XP020479669, ISSN: 0957-0233, DOI: 10.1088/1361-6501/ACFAB3 [retrieved on 2023-09-27] * the whole document * | 1-14 | |

-----

-----

-/--

**TECHNICAL FIELDS SEARCHED (IPC)**

G06N

The present search report has been drawn up for all claims

| Place of search | Date of completion of the search | Examiner |
|---|---|---|
| The Hague | 7 February 2025 | Ntarlagiannis, V |

EPO FORM 1503 03.82 (P04C01)

Europäisches
Patentamt

European
Patent Office

Office européen
des brevets

# EUROPEAN SEARCH REPORT

**Application Number**

EP 24 27 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DING NING ET AL: "A novel method for journal bearing degradation evaluation and remaining useful life prediction under different working conditions", MEASUREMENT., [Online] vol. 177, 16 March 2021 (2021-03-16), page 109273, XP093245689, GB ISSN: 0263-2241, DOI: 10.1016/j.measurement.2021.109273 Retrieved from the Internet: URL:https://www.sciencedirect.com/science/article/pii/S0263224121002803> [retrieved on 2025-01-31] * the whole document * ----- | 1-14 | |

TECHNICAL FIELDS
SEARCHED    (IPC)

The present search report has been drawn up for all claims

| Place of search | Date of completion of the search | Examiner |
|---|---|---|
| The Hague | 7 February 2025 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2